# EUROPEAN PATENT APPLICATION

(11) **EP 3 131 282 A1**
(43) Date of publication of application: **15.02.2017**
(21) Application number: 16183834.7
(22) Date of filing: 11.08.2016
(51) Int. Cl.: H04N 5/232, G06F 3/01, H04N 5/262

(54) **METHOD AND APPARATUS FOR CONTROLLING VIDEO IMAGE AND TERMINAL**

(30) Priority: 11.08.2015 CN 201510491289
(71) Applicant: Xiaomi Inc., Beijing 100085 (CN)
(72) Inventor: FU, Qiang, Haidian District, Beijing 100085 (CN); WANG, Yang, Haidian District, Beijing 100085 (CN); HOU, Enxing, Haidian District, Beijing 100085 (CN)
(74) Representative: Loustalan, Paul William

(57) **Abstract**

The present disclosure refers to a method and an apparatus for controlling a video image and a terminal. The method for controlling a video image includes: detecting (101) whether a predetermined rotating instruction is received, when displaying a first video image taken by the smart photographic device; sending (102, 204) the predetermined rotating instruction to the smart photographic device, if the predetermined rotating instruction is detected; displaying (103, 205) a second video image photographed by the smart photographic device after the smart photographic device is rotated according to the predetermined rotating instruction.

## Description

### TECHNICAL FIELD

The present disclosure generally relates to the communication technology field, and more particularly, to a method and an apparatus for controlling a video image and a terminal.

### BACKGROUND

Currently, after the smart phone and its associated smart photographic device are connected to a network respectively, the video images photographed by the smart photographic device may be displayed in real time via the smart phone. However, the range of the video image photographed is limited because of the limitation of the wide-angle of the smart photographic device.

### SUMMARY

In order to solve the problems existing in the related art, the present disclosure provides a method and an apparatus for controlling a video image and a terminal.

According to a first aspect of embodiments of the present disclosure, there is provided a method for controlling a video image, applied on a smart terminal associated with a smart photographic device, comprising:
detecting whether a predetermined rotating instruction is received, when displaying a first video image photographed by the smart photographic device;
sending the predetermined rotating instruction to the smart photographic device, if the predetermined rotating instruction is detected; and
displaying a second video image photographed by the smart photographic device after the smart photographic device is rotated according to the predetermined rotating instruction.

Alternatively, detecting whether a predetermined rotating instruction is received, when displaying a first video image photographed by the smart photographic device, comprises:
outputting a rotation option at a first predetermined location of a user interface displaying the first video image; and
determining that the predetermined rotating instruction is received, if a predetermined first touch event is received via the rotation option.

Alternatively, the step of outputting a rotation option at a first predetermined location of a user interface displaying the first video image, comprises:
detecting whether a predetermined second touch event is received at a second predetermined location of the user interface; and
outputting the rotation option at the first predetermined location of the user interface, if the predetermined second touch event is received.

Alternatively, the method further comprises:
detecting whether a third touch event is received at a third predetermined location of the user interface, after outputting the rotation option; and
hiding the rotation option, if the predetermined third touch event is received.

Alternatively, the step of determining that the predetermined rotating instruction is received, comprises:
determining that the predetermined rotating instruction received is a rotating instruction for rotating the smart photographic device by a predetermined angle in a predetermined direction, if the predetermined first touch event is a single-click event;
determining that the predetermined rotating instruction received is a rotating instruction for rotating the smart photographic device continuously in the predetermined direction, if the predetermined first touch event is a long-press event.

According to a second aspect of embodiments of the present disclosure, there is provided a method for controlling a video image, applied on a smart photographic device, the smart photographic device comprising a cradle head and a camera, the method comprising:
receiving a rotating instruction sent from a smart terminal; and
controlling the cradle head to drive the camera to rotate according to the rotating instruction, photographing a video image after rotating the camera, and returning the video image to the smart terminal.

Alternatively, the step of controlling the cradle head to drive the camera to rotate according to the rotating instruction, comprises:
controlling the cradle head to drive the camera to rotate by a predetermined angle in a predetermined direction; or
controlling the cradle head to drive the camera to continuously rotate in a predetermined direction.

According to a third aspect of embodiments of the present disclosure, there is provided an apparatus for controlling a video image, applied on a smart terminal associated with a smart photographic device, comprising:
a detecting unit, configured to detect whether a predetermined rotating instruction is received, when displaying a first video image photographed by the smart photographic device;
a sending unit, configured to send the predetermined rotating instruction to the smart photographic device, if the predetermined rotating instruction is detected; and
a displaying unit, configured to display a second video image photographed by the smart photographic device after the smart photographic device is rotated according to the predetermined rotating instruction.

Alternatively, the detecting unit comprises:
an outputting sub-unit, configured to output a rotation option at a first predetermined location of a user interface displaying the first video image; and
a determining sub-unit, configured to determine that the predetermined rotating instruction is received, if a predetermined first touch event is received via the rotation option.

Alternatively, the outputting sub-unit comprises:
a first detecting module, configured to detect whether a predetermined second touch event is received at a second predetermined location of the user interface; and
an outputting module, configured to output the rotation option at the first predetermined location of the user interface, if the predetermined second touch event is received.

Alternatively, the outputting sub-unit further comprises:
a second detecting module, configured to detect whether a predetermined third touch event is received at a third predetermined location of the user interface; and
a hiding module, configured to hide the rotation option, if the predetermined third touch event is received.

Alternatively, the determining sub-unit comprises:
a first determining module, configured to determine that the predetermined rotating instruction received is a rotating instruction for rotating the smart photographic device by a predetermined angle in a predetermined direction, if the predetermined first touch event is a single-click event; and
a second determining module, configured to determine that the predetermined rotating instruction received is a rotating instruction for rotating the smart photographic device continuously in the predetermined direction, if the predetermined first touch event is a long-press event.

According to a fourth aspect of embodiments of the present disclosure, there is provided an apparatus for controlling a video image, applied on a smart photographic device, the smart photographic device comprising a cradle head and a camera, the apparatus comprising:
a receiving unit, configured to receive a rotating instruction sent from a smart terminal; and
a control unit, configured to control the cradle head to drive the camera to rotate according to the rotating instruction, to photograph a video image after a rotation, and to return the video image to the smart terminal.

Alternatively, the control unit comprises:
a first control sub-unit, configured to control the cradle head to drive the camera to rotate by a predetermined angle in a predetermined direction; or
a second control sub-unit, configured to control the cradle head to drive the camera to continuously rotate in a predetermined direction.

According to a fifth aspect of embodiments of the present disclosure, there is provided a terminal, comprising:
a processor; and a memory for storing instructions executable by the processor;
in which the processor is configured to:
   detect whether a predetermined rotating instruction is received, when displaying a first video image photographed by the smart photographic device;
   send the predetermined rotating instruction to the smart photographic device, if the predetermined rotating instruction is detected; and
   display a second video image photographed by the smart photographic device after the smart photographic device is rotated according to the predetermined rotating instruction.

According to a sixth aspect of embodiments of the present disclosure, there is provided a terminal, comprising:
a cradle head; a camera; a processor; and a memory for storing instructions executable by the processor;
in which the processor is configured to:
   receive a rotating instruction sent from a smart terminal;
   control the cradle head to drive the camera to rotate according to the rotating instruction, photograph a video image after a rotation and return the video image to the smart terminal.

The technical solutions provided by embodiments of the present disclosure may include following advantages.

With the present disclosure, when displaying a video image, if the predetermined rotating instruction is received, the rotating instruction is sent to the smart photographic device, and the smart photographic device may rotate according to the rotating instruction. Because the smart photographic device can photograph video images within other ranges after rotation, a coverage of the video image is expanded, thus improving a user experience.

With the present disclosure, since the rotation option is displayed in the video image, the touch event inputted by the user is received via the rotation option, and it may be quickly determined that the rotating instruction is received. In this way, it may be convenient for the user to input the rotating instruction, such that a simplification for a user's operation is improved and the user experience is good.

With the present disclosure, the user interface may only display the video image, and output the rotation option for selecting by the user when the predetermined second touch event is received at the second predetermined location of the user interface, that is, when the user needs to input the rotating instruction. Therefore, a full video image is displayed when the user does not need to input the rotating instruction, thus improving a displaying effect of the video image.

With the present disclosure, after the user inputs the rotating instruction, the third touch event is triggered, and once the terminal detects the third touch event, the rotation option displayed is hidden, such that the full video image may be displayed, thus improving the displaying effect of the video image.

With the present disclosure, if the user single-clicks the rotation option, the smart terminal detects the single-click event, then it is determined that the rotating instruction received is a rotating instruction for rotating the smart photographic device by a predetermined angle in a predetermined direction; if the user long-presses the rotation option, the smart terminal detects the long-press event, then it is determined that the rotating instruction received is a rotating instruction for rotating the smart photographic device continuously in a predetermined direction. In this way, it may be convenient for the user to adjust the rotation angle of the smart photographic device, such that a simplification for a user's operation may be improved and the user experience is good.

With the present disclosure, the camera may be installed on the cradle head, and the cradle head may rotate in any direction and by any angle. If the rotating instruction sent by the smart terminal is received, the cradle head may be controlled to drive the camera to rotate according to the rotating instruction, and the video image is photographed after rotation and is returned to the smart terminal. Since the camera can photograph video images within a larger range after rotation, a monitoring range is increased.

With the present disclosure, the user may enable the smart photographic device to rotate by the predetermined angle in the predetermined direction when requiring the smart photographic device to rotate within a smaller range, and may also enable the smart photographic device to continuously rotate when requiring the smart photographic device to rotate within a larger range, such that the monitoring range is changed quickly and the user experience is enhanced.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for controlling a video image, according to an example embodiment.
Fig. 1 B is a schematic diagram showing a common application scene, according to an example embodiment.
Fig. 1C is a schematic diagram showing a smart terminal displaying a video image, according to an example embodiment.
Fig. 2A is a flow chart showing another method for controlling a video image, according to an example embodiment.
Fig. 2B is a schematic diagram showing another smart terminal displaying a video image, according to an example embodiment.
Fig. 3 is a flow chart showing a method for controlling a video image, according to an example embodiment.
Fig. 4 is a block diagram of an apparatus for controlling a video image, according to an example embodiment.
Figs. 5-10 are block diagrams of another apparatus for controlling a video image, according to an example embodiment.
Fig. 11 is a block diagram of a device for controlling a video image, according to an example embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the present disclosure are only for purpose of description of specific embodiments, but not constructed to limit the present disclosure. The singular forms such as "a/an", "the" used in the present disclosure and the appended claims also include plural forms unless otherwise distinctly represented in the contexts. It also should be noted that, the term "and/or" used herein means any one of associated listed items or all combinations thereof.

It should be noted that, although the terms the first, the second, the third to describe various information, the information should not be limited to these terms. These terms are only for distinguish the same kind of information. For instance, the first information may also be referred as the second information, and similarly, the second information may also be referred as the first information, without departing from the scope of the present disclosure. Depending on the contexts, the word "if" used herein may also be interpreted as "during" or "when" or "responding determining".

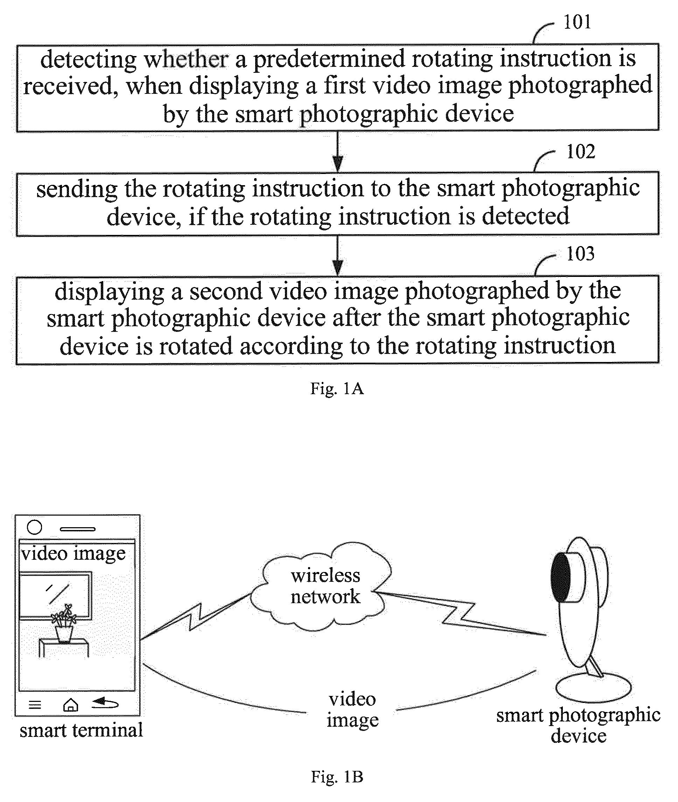

Fig. 1A is a flow chart showing a method for controlling a video image, according to an example embodiment. The method is applied on a smart terminal associated with a smart photographic device and includes the following steps.

In step 101, it is detected whether a predetermined rotating instruction is received, when displaying a first video image photographed by the smart photographic device.

The smart photographic device involved in embodiments of the present disclosure may be a smart device having both video shooting function and wireless network access function, and the smart photographic device may be disposed at any site with the monitoring demand as needed. A structure of the smart photographic device generally includes a camera and a cradle head driving the camera to rotate as well.

The smart terminal involved in embodiments of the present disclosure may be a smart device having both wireless network access function and video playing function, for example a portable terminal such as a smart phone, a panel computer, a PDA (Personal Digital Assistant), etc..

The smart terminal may establish an association with the smart photographic device in advance. If the smart terminal and the smart photographic device are connected to a network respectively, the smart terminal may establish a wireless connection with the smart photographic device, and then receives the video image transmitted by the smart photographic device via the wireless connection. The smart photographic device may transmit the video image photographed in real time to the smart terminal after the wireless connection with the smart terminal is established.

In step 102, the rotating instruction is sent to the smart photographic device, if the rotating instruction is detected.

After acquiring the video image from the smart photographic device, the smart terminal displays the video image on a display screen of the terminal for the user of the terminal to view. As shown in Fig. 1B, Fig. 1B is a schematic diagram showing a common application scene according to an embodiment, which includes a mobile phone as the smart terminal and a XiaoYi camera as the smart photographic device. The user installs the smart photographic device in a living room of his/her home, and may perform a remote monitoring by using the smart terminal to receive the video image transmitted by the smart photographic device via the wireless connection. Generally, a visual angle of shooting of the smart photographic device is limited, such as between 110° to 180°. The smart photographic device in Fig. 1B includes the XiaoYi camera and a cradle head installed below the XiaoYi camera. A wide angle of the XiaoYi camera is 110°. Therefore, if the XiaoYi camera is fixed at a certain location for collecting the video image, it may be known from the video image displayed by the smart terminal in Fig. 1 B that the monitoring range of the XiaoYi camera is limited.

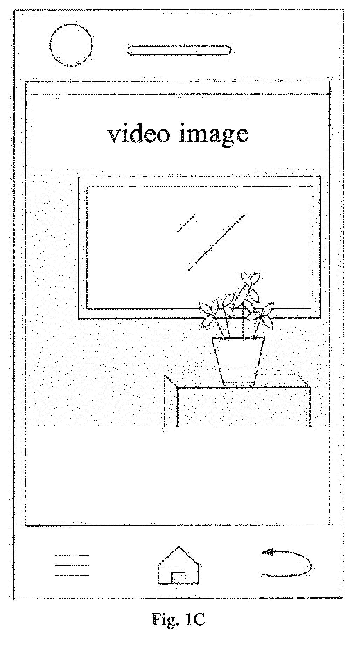

In the embodiment of the present disclosure, the user may input the rotating instruction into the smart terminal. When receiving the rotating instruction, the smart terminal may send the rotating instruction to the smart photographic device, and the smart photographic device may rotate the cradle head to drive the camera to rotate according to the rotating instruction. Therefore, due to a rotation of the camera, the video images within a larger range may be photographed and returned to the smart terminal for displaying on the display screen, thus increasing the monitoring range and improving the user experience. As shown in Fig. 1C, Fig. 1C is a schematic diagram showing a smart terminal displaying a video image according to the present disclosure. Compared with the schematic diagram of the smart terminal in Fig. 1B, it may be known that Fig. 1C shows the video image photographed by the camera after rotation, thus increasing the monitoring range.

In an alternative implementation, detecting whether a predetermined rotating instruction is received, when displaying a first video image photographed by the smart photographic device, may include:
outputting a rotation option at a first predetermined location of a user interface displaying the first video image; and
determining that the predetermined rotating instruction is received, if a predetermined first touch event is received via the rotation option.

The first predetermined location may be any location on the user interface displaying the first video image, for instance, a midpoint position at each of four edges of the user interface, or a vertex position of the user interface.

The rotation option may be one or more, and may be displayed in a form of icon or choice box. When the user clicks the icon or the choice box, it is determined that the rotating instruction is received.

The first touch event may be a single-click event, a double-click event or a long-press event, etc..

The first predetermined location, the rotation option and the first touch event mentioned above may be flexibly configured by these skilled in the art according to actual demands, which are not limited in this embodiment.

With the above embodiment of the present disclosure, since the rotation option is displayed in the video image, by receiving the touch event inputted by the user via the rotation option, it may be quickly determined that the rotating instruction is received. In this way, it may be convenient for the user to input the rotating instruction, such that a simplification for a user's operation is improved and the user experience is good.

Outputting a rotation option at a first predetermined location of a user interface displaying the first video image, includes:
detecting whether a predetermined second touch event is received at a second predetermined location of the user interface; and
outputting the rotation option at the first predetermined location of the user interface, if the second touch event is received.

The second predetermined location may be any location on the user interface displaying the first video image, for instance, a midpoint of the user interface, or a position in the central region of the user interface or the like.

The second touch event may be a single-click event, a double-click event or a long-press event or the like.

The second predetermined location and the second touch event mentioned above may be flexibly configured by these skilled in the art according to actual demands, which are not limited in the embodiment.

In the embodiment above, the user interface may only display the video image, and output the rotation option for the users to select when the predetermined second touch event is received at the second predetermined location of the user interface, that is, when the user needs to input the rotating instruction. Therefore, a full video image is displayed when the user does not need to input the rotating instruction, thus improving a displaying effect of the video image.

It is detected whether a predetermined third touch event is received at a third predetermined location of the user interface, after outputting the rotation option; the rotation option is hidden, if the third touch event is received.

The third predetermined location may be any location on the user interface displaying video images, for instance, a midpoint of the user interface, or a position in the central region of the user interface or the like.

The third touch event may be a single-click event, a double-click event, a long-press event or the like.

The third predetermined location and the third touch event mentioned above may be flexibly configured by these skilled in the art, which are not limited in the embodiment.

In the embodiment above, after the user inputs the rotating instruction, the third touch event is triggered, and once the terminal detects the third touch event, the rotation option displayed is hidden, such that the full video image may be displayed, thus improving the displaying effect of the video image.

In an alternative implementation, determining that the rotating instruction is received, includes:
determining that the rotating instruction received is a rotating instruction for rotating the smart photographic device by a predetermined angle in a predetermined direction, if the first touch event is a single-click event;
determining that the rotating instruction received is a rotating instruction for rotating the smart photographic device continuously in a predetermined direction, if the first touch event is a long-press event.

In the embodiment above, if the user single-clicks the rotation option, the smart terminal detects the single-click event, then it is determined that the rotating instruction received is a rotating instruction for rotating the smart photographic device by a predetermined angle in a predetermined direction; if the user long-presses the rotation option, the smart terminal detects the long-press event, then it is determined that the rotating instruction received is a rotating instruction for rotating the smart photographic device continuously in a predetermined direction. In this way, it may be convenient for the user to adjust the rotation angle of the smart photographic device, thus improving a simplification for a user's operation and enhancing the user experience.

In step 103, a second video image photographed by the smart photographic device is displayed after the smart photographic device is rotated according to the rotating instruction.

After the smart photographic device is rotated according to the rotating instruction, a shooting range of the smart photographic device is changed, and the video image photographed by the smart photographic device after rotation is sent to the smart photographic device for display, thus increasing the monitoring range of the smart photographic device and improving the user experience.

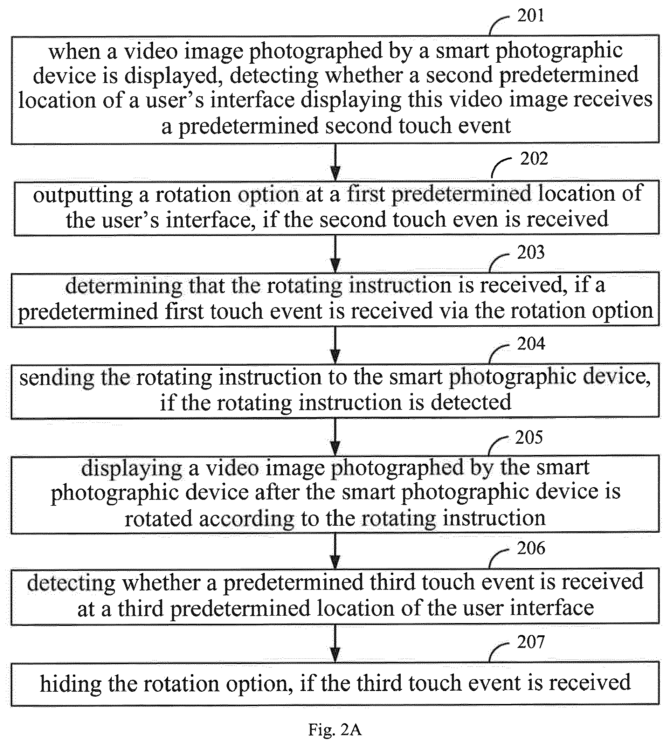

As shown in Fig. 2A, Fig. 2A is a flow chart showing another method for controlling a video image, according to an example embodiment. The method includes the following steps.
In step 201, when a video image photographed by a smart photographic device is displayed, it is detected whether a second predetermined location of a user interface displaying this video image receives a predetermined second touch event.
In step 202, a rotation option is outputted at a first predetermined location of the user interface, if the second touch even is received.
In step 203, it is determined that the rotating instruction is received, if a predetermined first touch event is received via the rotation option.
In step 204, the rotating instruction is sent to the smart photographic device, if the rotating instruction is detected.
In step 205, a video image photographed by the smart photographic device is displayed after the smart photographic device is rotated according to the rotating instruction.
In step 206, it is detected whether a predetermined third touch event is received at a third predetermined location of the user interface.
In step 207, the rotation option is hidden, if the third touch event is received.

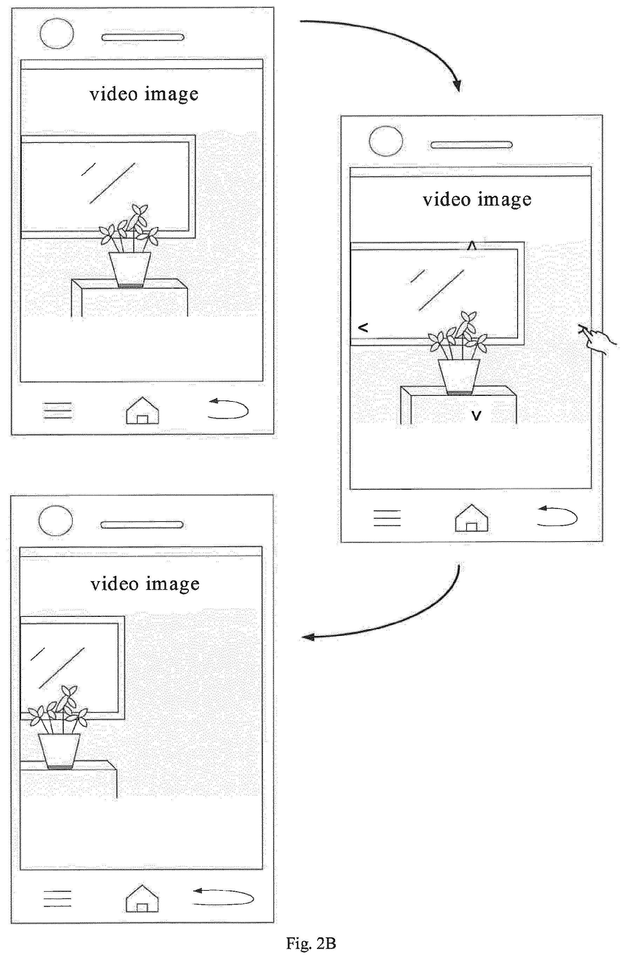

For example, as shown in Fig. 2B, Fig. 2B is a schematic diagram showing a smart terminal displaying a video image according to the present disclosure. It may be seen from the figure, the smart phone displays the video image currently photographed by the camera. If the user clicks a center of the video image, the terminal receives the second touch event, and the rotation options are outputted at midpoint positions at each of four edges of the user interface. The four rotation options are shown in a form of icon in the figure, and these four icons are corresponding respectively to the upward, downward, leftward and rightward rotation direction. If the user single-clicks the rightward icon, the smart phone receives the first touch event, determines that the rotating instruction is generated and sends the rotating instruction to the smart photographic device; once receiving the rotating instruction, the smart photographic device controls the cradle head to rotate so as to drive the camera to rotate by a predetermined angle, and the camera outputs the video image photographed to the smart phone. If the user does not need to input the rotating instruction, the center of the video image may be clicked again, and the smart phone receives the third touch event, then the rotation option is hidden. In this way, the user interface does not display the rotation option, such that the displaying effect of the video image is better.

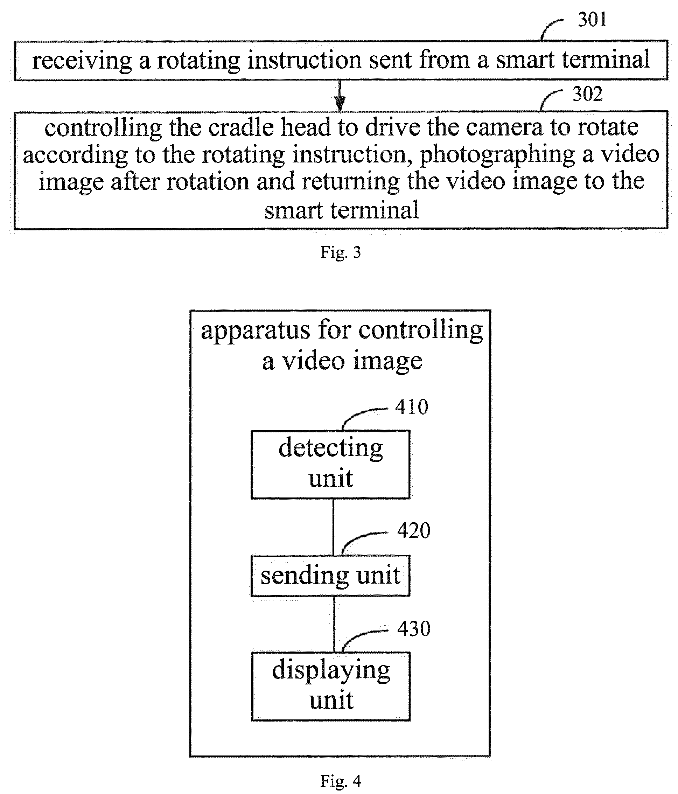

As shown in Fig. 3, Fig. 3 is a flow chart showing a method for controlling a video image, according to an example embodiment. The method is applied on a smart photographic device. The smart photographic device includes a cradle head and a camera. The method includes the following steps.
In step 301, a rotating instruction sent from a smart terminal is received.
In step 302, the cradle head is controlled to drive the camera to rotate according to the rotating instruction, and a video image is photographed after rotation and is returned to the smart terminal.

In this embodiment, the camera may be installed on the cradle head, and the cradle head may rotate in any direction and by any angle. If the rotating instruction sent by the smart terminal is received, the cradle head may be controlled to drive the camera to rotate according to the rotating instruction, and the video image is photographed after rotation and is returned to the smart terminal. Since the camera can photographs video images within a larger range after rotation, a monitoring range is increased.

Controlling the cradle head to drive the camera to rotate according to the rotating instruction, may include: controlling the cradle head to drive the camera to rotate by a predetermined angle in a predetermined direction; or controlling the cradle head to drive the camera to continuously rotate in a predetermined direction.

The predetermined direction may be any direction, such as a horizontally leftward or vertically upward direction, and the predetermined angle may be 10°, 12° or 15°. With the two rotating manners, the user may enable the smart photographic device to rotate by the predetermined angle in the predetermined direction when requiring the smart photographic device to rotate within a smaller range, and may also enable the smart photographic device to continuously rotate when requiring the smart photographic device to rotate within a larger range, such that the monitoring range is changed quickly and the user experience is enhanced.

As shown in Fig. 4, Fig. 4 is a block diagram of an apparatus for controlling a video image, according to an example embodiment. The apparatus is applied on a smart terminal associated with a smart photographic device. The apparatus includes: a detecting unit 410, a sending unit 420 and a displaying unit 430.

The detecting unit 410 is configured to detect whether a predetermined rotating instruction is received, when displaying a first video image photographed by the smart photographic device.

The sending unit 420 is configured to send the rotating instruction to the smart photographic device, if the rotating instruction is detected.

The displaying unit 430 is configured to display a second video image photographed by the smart photographic device after the smart photographic device is rotated according to the rotating instruction.

It may be known from the embodiments above that, with the present disclosure, when displaying a video image, if the predetermined rotating instruction is received, the rotating instruction is sent to the smart photographic device, and the smart photographic device may rotate according to the rotating instruction. Because the smart photographic device can take video images within other ranges after rotation, a coverage of the video image is expanded, thus improving a user experience.

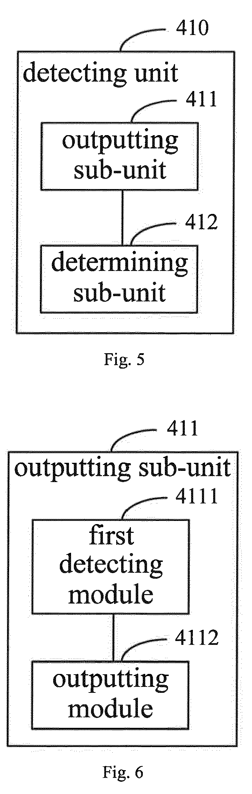

As shown in Fig. 5, Fig. 5 is a block diagram of another apparatus for controlling a video image, according to an example embodiment. Based on the embodiment of Fig. 4, the detecting unit 410 in this embodiment includes: an outputting sub-unit 411 and a determining sub-unit 412.

The outputting sub-unit 411 is configured to output a rotation option at a first predetermined location of a user interface displaying the first video image.

The determining sub-unit 412 is configured to determine that the rotation instruction is received, if a predetermined first touch event is received via the rotation option.

It may be known from the embodiments above that, with the present disclosure, since the rotation option is displayed in the video image, by receiving the touch event inputted by the user via the rotation option, it may be quickly determined that the rotating instruction is received. In this way, it may be convenient for the user to input the rotating instruction, such that a simplification for a user's operation is improved and the user experience is good.

As shown in Fig. 6, Fig. 6 is a block diagram of another apparatus for controlling a video image, according to an example embodiment. Based on the embodiment of Fig. 4, the outputting sub-unit 411 in this embodiment includes: a first detecting module 4111 and an outputting module 4112.

The first detecting module 4111 is configured to detect whether a predetermined second touch event is received at a second predetermined location of the user interface.

The outputting module 4112 is configured to output the rotation option at the first predetermined location of the user interface, if the second touch event is received.

It may be known from the embodiments above that, with the present disclosure, the user interface may only display the video image, and output the rotation option for the user to select if the predetermined second touch event is received at the second predetermined location of the user interface, that is, when the user needs to input the rotating instruction. Therefore, a full video image is displayed if the user does not need to input the rotating instruction, thus improving a displaying effect of the video image.

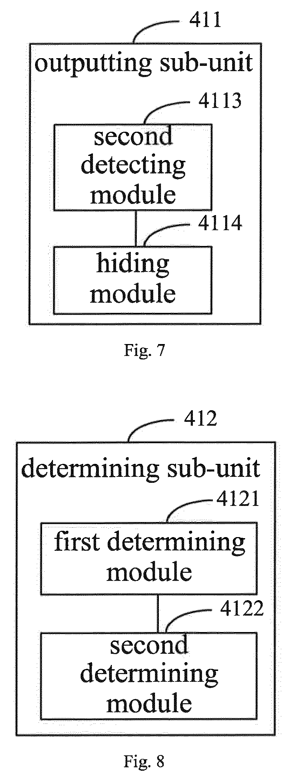

As shown in Fig. 7, Fig. 7 is a block diagram of another apparatus for controlling a video image, according to an example embodiment. Based on the embodiment of Fig. 4, the outputting sub-unit 411 in this embodiment further includes: a second detecting module 4113 and a hiding module 4114.

The second detecting module 4113 is configured to detect whether a predetermined third touch event is received at a third predetermined location of the user interface.

The hiding module 4114 is configured to hide the rotation option, if the third touch event is received.

It may be known from the embodiments above that, with the present disclosure, after the user inputs the rotating instruction, the third touch event is triggered, and once the terminal detects the third touch event, the rotation option displayed is hidden, such that the full video image may be displayed, thus improving the displaying effect of the video image.

As shown in Fig. 8, Fig. 8 is a block diagram of another apparatus for controlling a video image, according to an example embodiment. Based on the embodiment of Fig. 4, the determining sub-unit 412 in this embodiment further includes a first determining module 4121 and a second determining module 4122.

The first determining module 4121 is configured to determine that the rotating instruction received is a rotating instruction for rotating the smart photographic device by a predetermined angle in a predetermined direction, if the first touch event is a single-click event.

The second determining module 4122 is configured to determine that the rotating instruction received is a rotating instruction for rotating the smart photographic device continuously in a predetermined direction, if the first touch event is a long-press event.

It may be known from the embodiments above that, with the present disclosure, if the user single-clicks the rotation option, the smart terminal detects the single-click event, then it is determined that the rotating instruction received is a rotating instruction for rotating the smart photographic device by a predetermined angle in a predetermined direction; if the user long-presses the rotation option, the smart terminal detects the long-press event, then it is determined that the rotating instruction received is a rotating instruction for rotating the smart photographic device continuously in a predetermined direction. In this way, it may be convenient for the user to adjust the rotation angle of the smart photographic device, thus improving a simplification for a user's operation and enhancing the user experience.

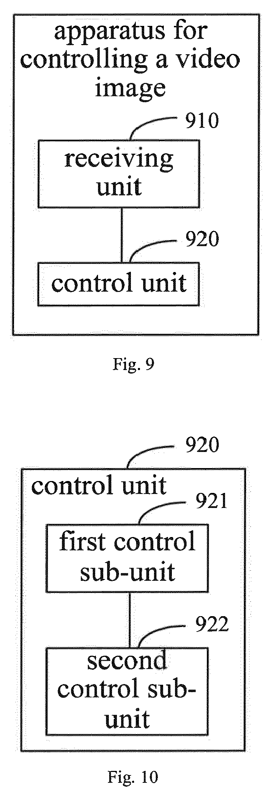

As shown in Fig. 9, Fig. 9 is a block diagram of an apparatus for controlling a video image, according to an example embodiment. The apparatus is applied on a smart photographic device, and the smart photographic device includes a cradle head and a camera. The apparatus includes: a receiving unit 910 and a control unit 920.

The receiving unit 910 is configured to receive a rotating instruction sent from a smart terminal.

The control unit 920 is configured to control the cradle head to drive the camera to rotate according to the rotating instruction, to photograph a video image after a rotation and to return the video image to the smart terminal.

It may be known from the embodiments above that, with the present disclosure, the camera may be installed on the cradle head, and the cradle head may rotate in any direction and by any angle. If the rotating instruction sent by the smart terminal is received, the cradle head may be controlled to drive the camera to rotate according to the rotating instruction, and the video image is taken after rotation and is returned to the smart terminal. Since the camera can takes video images within a larger range after rotation, a monitoring range is increased.

As shown in Fig. 10, Fig. 10 is a block diagram of another apparatus for controlling a video image, according to an example embodiment. Based on the embodiment of Fig. 9, the control unit 920 in this embodiment includes a first control sub-unit 921 and a second control sub-unit 922.

The first control sub-unit 921 is configured to control the cradle head to drive the camera to rotate by a predetermined angle in a predetermined direction.

The second control sub-unit 922 is configured to control the cradle head to drive the camera to continuously rotate in a predetermined direction.

With the present disclosure, the user may enable the smart photographic device to rotate by the predetermined angle in the predetermined direction when requiring the smart photographic device to rotate within a smaller range, and may also enable the smart photographic device to continuously rotate when requiring the smart photographic device to rotate within a larger range, such that the monitoring range is changed quickly and the user experience is enhanced.

Accordingly, the present disclosure also provides a terminal, including:
a processor; and a memory for storing instructions executable by the processor;
in which the processor is configured to:
   detect whether a predetermined rotating instruction is received, when displaying a first video image photographed by the smart photographic device;
   send the predetermined rotating instruction to the smart photographic device, if the predetermined rotating instruction is detected; and
   display a second video image photographed by the smart photographic device after the smart photographic device is rotated according to the predetermined rotating instruction.

Accordingly, the present disclosure also provides a terminal, including:
a cradle head; a camera; a processor; and a memory for storing instructions executable by the processor;
in which the processor is configured to:
   receive a rotating instruction sent from a smart terminal; and
   control the cradle head to drive the camera to rotate according to the rotating instruction, photograph a video image after a rotation and return the video image to the smart terminal.

With respect to the apparatuses in the above embodiments, the specific manners for performing operations for individual units therein have been described in detail in the embodiments regarding the methods above, which will not be elaborated herein.

Embodiments of the devices correspond to embodiments of the methods. For a related content, reference is made to partial descriptions of the embodiments of the methods. The above embodiments of the devices are exemplary. Units described as separate components may be or may not be physically separated. Components shown as units may be or may not be physical units, in other words, may be integrated on one position or distributed to a plurality of network units. Some or all of the modules may be selected to achieve the objective of the solution of the embodiments according to actual requirements. Those skilled in the art may understand and implement the present disclosure without making creative efforts.

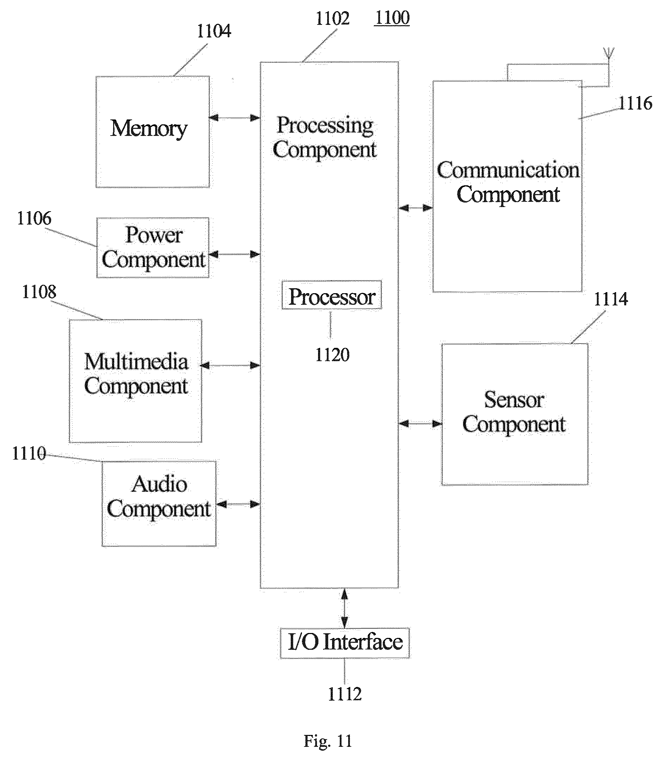

As shown in Fig. 11, Fig. 11 is a block diagram of a device for controlling a video image, according to an example embodiment. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a terminal, causes the terminal to perform the method for controlling a video image described above.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for controlling a video image, applied on a smart terminal associated with a smart photographic device, comprising:
detecting (101) whether a predetermined rotating instruction is received, when displaying a first video image photographed by the smart photographic device;
sending (102, 204) the predetermined rotating instruction to the smart photographic device, if the predetermined rotating instruction is detected; and
displaying (103, 205) a second video image photographed by the smart photographic device after the smart photographic device is rotated according to the predetermined rotating instruction.

2. The method according to claim 1, wherein the step of detecting (101) whether a predetermined rotating instruction is received, when displaying a first video image photographed by the smart photographic device, comprises:
outputting a rotation option at a first predetermined location of a user interface displaying the first video image; and
determining (203) that the predetermined rotating instruction is received, if a predetermined first touch event is received via the rotation option.

3. The method according to claim 2, wherein the step of outputting a rotation option at a first predetermined location of a user interface displaying the first video image, comprises:
detecting (201) whether a predetermined second touch event is received at a second predetermined location of the user interface ; and
outputting (202) the rotation option at the first predetermined location of the user interface, if the predetermined second touch event is received.

4. The method according to claim 3, further comprising:
detecting (206) whether a predetermined third touch event is received at a third predetermined location of the user interface, after outputting the rotation option; and
hiding (207) the rotation option, if the predetermined third touch event is received.

5. The method according to claim 2, 3, or 4, wherein the step of determining that the predetermined rotating instruction is received, comprises:
determining that the predetermined rotating instruction received is a rotating instruction for rotating the smart photographic device by a predetermined angle in a predetermined direction, if the predetermined first touch event is a single-click event;
determining that the predetermined rotating instruction received is a rotating instruction for rotating the smart photographic device continuously in the predetermined direction, if the predetermined first touch event is a long-press event.

6. A method for controlling a video image, applied on a smart photographic device, the smart photographic device comprising a cradle head and a camera, the method comprising:
receiving (301) a rotating instruction sent from a smart terminal; and
controlling (302) the cradle head to drive the camera to rotate according to the rotating instruction, photographing a video image after a rotation and returning the video image to the smart terminal.

7. The method according to claim 6, wherein controlling the cradle head to drive the camera to rotate according to the rotating instruction, comprises:
controlling the cradle head to drive the camera to rotate by a predetermined angle in a predetermined direction; or
controlling the cradle head to drive the camera to continuously rotate in a predetermined direction.

8. An apparatus for controlling a video image, applied on a smart terminal associated with a smart photographic device, comprising:
a detecting unit (410), configured to detect whether a predetermined rotating instruction is received, when displaying a first video image photographed by the smart photographic device;
a sending unit (420), configured to send the predetermined rotating instruction to the smart photographic device, if the predetermined rotating instruction is detected; and
a displaying unit (430), configured to display a second video image photographed by the smart photographic device after the smart photographic device is rotated according to the predetermined rotating instruction.

9. The apparatus according to claim 8, wherein the detecting unit (410) comprises:
an outputting sub-unit (411), configured to output a rotation option at a first predetermined location of a user interface displaying the first video image; and
a determining sub-unit (412), configured to determine that the predetermined rotating instruction is received, if a predetermined first touch event is received via the rotation option.

10. The apparatus according to claim 9, wherein the outputting sub-unit (411) comprises:
a first detecting module (4111), configured to detect whether a predetermined second touch event is received at a second predetermined location of the user interface; and
an outputting module (4112), configured to output the rotation option at the first predetermined location of the user interface, if the predetermined second touch event is received.

11. The apparatus according to claim 9 or 10, wherein the determining sub-unit (412) comprises:
a first determining module (4121), configured to determine that the predetermined rotating instruction received is a rotating instruction for rotating the smart photographic device by a predetermined angle in a predetermined direction, if the predetermined first touch event is a single-click event; and
a second determining module (4122), configured to determine that the predetermined rotating instruction received is a rotating instruction for rotating the smart photographic device continuously in the predetermined direction, if the predetermined first touch event is a long-press event.

12. An apparatus for controlling a video image, applied on a smart photographic device, the smart photographic device comprising a cradle head and a camera, the apparatus comprising:
a receiving unit (910), configured to receive a rotating instruction sent from a smart terminal; and
a control unit (920), configured to control the cradle head to drive the camera to rotate according to the rotating instruction, to photograph a video image after a rotation, and to return the video image to the smart terminal.

13. The apparatus according to claim 12, wherein the control unit (920) comprises:
a first control sub-unit (921), configured to control the cradle head to drive the camera to rotate by a predetermined angle in a predetermined direction; or
a second control sub-unit (922), configured to control the cradle head to drive the camera to continuously rotate in a predetermined direction.

14. A terminal, comprising:
a processor; and
a memory for storing instructions executable by the processor;
wherein the processor is configured to carry out the method of any of claims 1 to 5.

15. A terminal, comprising:
a cradle head;
a camera;
a processor; and
a memory for storing instructions executable by the processor;
wherein the processor is configured to carry out the method of claim 6 or 7.
